# EUROPÄISCHE PATENTSCHRIFT

(11) **EP 2 677 263 B1**
(45) Veröffentlichungstag und Bekanntmachung des Hinweises auf die Patenterteilung: **02.12.2015**
(21) Anmeldenummer: 13170660.8
(22) Anmeldetag: 05.06.2013
(51) Int. Cl.: H01M 10/6556

(54) **Wärmeübertrager**
Heat exchanger
Caloporteur

(30) Priorität: 19.06.2012 DE 102012210339
(43) Veröffentlichungstag der Anmeldung: 25.12.2013
(73) Patentinhaber: MAHLE Behr GmbH & Co. KG, 70469 Stuttgart (DE)
(72) Erfinder: Neff, Heiko, Dipl.-Ing. (FH), 71549 Auenwald (DE); Engelhardt, Martin, 71254 Ditzingen (DE); Hirsch, Stefan, Dipl.-Ing., 70180 Stuttgart (DE)
(74) Vertreter: Grauel, Andreas

(56) Entgegenhaltungen:
- EP-A1- 1 795 853
- CH-A5- 661 464
- DE-A1-102008 033 594
- US-A1- 2006 048 930

## Beschreibung

### Technisches Gebiet

Die Erfindung betrifft einen Wärmeübertrager, insbesondere einen Kühler für Batterien oder Elektronikbauteile, insbesondere für Kraftfahrzeuge.

### Stand der Technik

In Kraftfahrzeugen aber auch in anderen Anwendungen werden Batterien immer häufiger verwendet. Beim Betrieb der Batterien wird dabei Abwärme erzeugt aufgrund der Verlustwärme aufgrund der Prozesse innerhalb der Batterie selbst. Dies führt zwangsläufig zu einer Erwärmung der Batterie.

Die dabei derzeit favorisierten Li-Ionen-Batterien weisen eine Temperaturabhängigkeit auf, insofern ab einer auch bauartbedingten Temperaturgrenze die Batteriezellen deutlich schneller altern, so dass dadurch die Lebensdauer der Batterie deutlich absinkt, was bei den heutigen Preisen für solche Batterien nicht akzeptabel ist.

Daher ist es für solche Batterien entscheidend, die Verlustwärme der Batterie abzuführen, um keine überhöhten Temperaturen der Batterie zulassen zu müssen.

Weiterhin haben diese Batterien bei tiefen Temperaturen den Nachteil, dass ihre Leistungsfähigkeit ebenso beschränkt ist. In solchen Situationen wäre eine Erwärmung der Batterie auf eine erhöhte Temperatur erwünscht.

Dazu werden heute Wärmeübertrager eingesetzt, wie sie beispielsweise durch die ältere Anmeldung der Anmelderin DE 10 2011 005 236 bekannt geworden sind. Solche Wärmeübertrager weisen jedoch hinsichtlich ihrer Ausdehnung noch Nachteile auf, weil sie relativ hoch bauen und damit mehr Bauraum erfordern als dafür in manchen Anwendungen zur Verfügung gestellt werden soll.

### Darstellung der Erfindung, Aufgabe, Lösung, Vorteile

Es ist die Aufgabe der Erfindung, einen Wärmeübertrager der eingangs genannten Art zu schaffen, der eine geringe Bauhöhe aufweist und dennoch einfach und kostengünstig herstellbar ist.

Dies wird mit den Merkmalen von Anspruch 1 erreicht. US 2006/0048930 zeigt einen Wärmetauscher mit den Merkmalen des Oberbegriffes des Patentanspruchs 1.

Ein Ausführungsbeispiel der Erfindung sieht einen Wärmeübertrager vor, insbesondere zur Temperierung für Batterien oder Elektronik, mit zumindest einem Sammelrohr mit einem Boden und einem Deckel, mit in dem Boden vorgesehenen Öffnungen zur Aufnahme von Rohrenden von Rohren die in Fluidkommunikation mit den Sammelrohren stehen, wobei die Sammelrohre aus einem U-förmigen Element mit zwei parallelen Schenkeln und einem die Schenkel verbindenden Bodenbereich gebildet sind, wobei die Öffnungen in dem Bodenbereich vorgesehen sind und als Deckel ein zwischen die Schenkel eingeführter Wandbereich vorgesehen ist. Dadurch kann eine flache Bauweise realisiert werden und dennoch kann eine effiziente Gestaltung mit geringem kühlmittel- bzw. kältemittelseitigem Druckabfall im Sammelrohr geschaffen werden. Vorteilhaft sind die Rohre an ihren beiden gegenüberliegenden Enden in Öffnungen von Sammelrohren abgedichtet aufgenommen. Wird nur ein Sammelrohr verwendet, so kann beispielsweise eine Umlenkung im Rohr vorliegen oder das Rohr als Ganzes umgelenkt oder umgebogen sein.

Vorteilhaft ist insbesondere, wenn die Höhe der Öffnungen senkrecht zur Ebene der Schenkel im Wesentlichen dem Abstand der Schenkel auf ihrer Innenseite entspricht. Dadurch wird eine besonders flache Gestaltung erreicht. Wenn Flachrohre eingesetzt werden, und diese mit ihrer Flachseite parallel zu den Schenkeln angeordnet sind, wird eine besonders flache Bauweise realisiert.

Vorteilhaft ist es, wenn die Schenkel eine Lotplattierung aufweisen, die auf der Oberfläche der Innenseite der Schenkel aufgebracht ist.

Dadurch wird erreicht, dass die Verlötung der Außenfläche der Flachseiten der Flachrohre bzw. der Seiten der Rohre, die den Schenkeln direkt gegenüber liegen mit den Schenkeln verlötet werden. Dies erhöht die Stabilität des Sammelrohrs und kann dadurch zu einer Materialdickenreduktion im Bereich der Wandstärke des Sammelrohrs führen.

Dabei ist es auch vorteilhaft, wenn das Rohrende, bevorzugt an den Flachseiten, zumindest eines Rohrs oder aller Rohre mit den beiden sich gegenüberliegenden Schenkeln des Bodens verlötet ist.

Vorteilhaft ist weiterhin, wenn der Deckel durch ein im Schnitt vorzugsweise rechteckiges, massives Metallteil gebildet ist.

Auch ist es zweckmäßig, wenn die Rohre als Flachrohre mit Flachseiten gebildet sind, wobei die Ausdehnung der Rohre in einer Ebene parallel zu der Ebene der Schenkel des Bodens größer ist als in einer dazu senkrechten Ebene, insbesondere um das 3- bis 12-fache größer ist.

Gemäß eines weiteren vorteilhaften Ausführungsbeispiels ist es zweckmäßig, wenn eine Mehrzahl von Flachrohren nebeneinander angeordnet sind und auf die Flachseiten der Flachrohre eine Platte aufgelegt und mit den Flachrohren verbunden ist.

Vorteilhaft ist es, wenn die Ausdehnung der Platte in einer Richtung senkrecht zur Ebene der Schenkel im Wesentlichen der Ausdehnung der Schenkel in dieser Richtung entspricht.

Auch ist es zweckmäßig, wenn der Boden auf seiner Außenseite im Bodenbereich Durchzüge aufweist.

Dabei ist es zweckmäßig, wenn die Durchzüge die Flachseiten der Flachrohre übergreifen. Dadurch kann auf der Außenseite des Sammelrohrs eine stabile Lötverbindung zwischen dem Rohr und dem Sammelrohr erzielt werden.

Weitere vorteilhafte Ausgestaltungen sind durch die nachfolgende Figurenbeschreibung und durch die Unteransprüche beschrieben.

### Kurze Beschreibung der Zeichnungen

Nachstehend wird die Erfindung auf der Grundlage zumindest eines Ausführungsbeispiels anhand der Zeichnungen näher erläutert. Es zeigen:
- Fig. 1: eine schematische Ansicht eines Sammelrohrs eines Wärmeübertragers mit einem in eine Öffnung eingeführten Rohr,
- Fig. 2: in Teilfiguren a), b), c) und d) jeweils Teilansichten des Sammelrohrs,
- Fig. 3: eine dreidimensionale Ansicht eines Sammelrohrs,
- Fig. 4: eine vergrößerte Ansicht eines Teils eines Sammelrohrs,
- Fig. 5: eine Ansicht eines Sammelrohrs mit Flachrohren, und
- Fig. 6: eine Ansicht eines Sammelrohrs mit Flachrohren und Deckplatte.

### Bevorzugte Ausführung der Erfindung

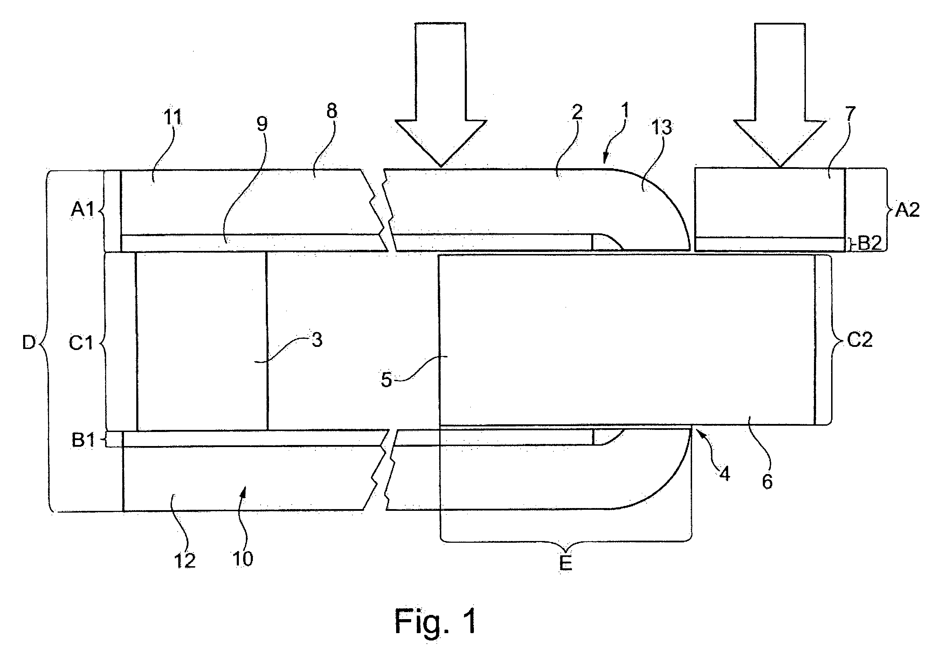

Die Figur 1 zeigt schematisch ein Sammelrohr 1 eines Wärmeübertragers, wobei das Sammelrohr 1 aus einem Boden 2 und einem Deckel 3 besteht. Das Sammelrohr 1 weist im Boden 2 Öffnungen 4 auf, in die Rohrenden 5 von Rohren 6 eingesetzt und abgedichtet verbunden sind. Die Rohre 6 stehen in Fluidkommunikation mit den Sammelrohren 2. Auf die Rohre 6 ist weiterhin eine Platte 7 als Deckplatte aufgelegt.

Der Boden 2 des Sammelrohrs 1 ist u-förmig gestaltet, wobei der Boden 2 ein Kernmaterial 8 aufweist, welches mit einer Lotplattierung 9 versehen ist, wobei die Lotplattierung auf der Innenseite des U-förmigen Bodens 2 aufgebracht ist. Der Deckel 3 ist am offenen Endbereich 10 des Bodens 2 zwischen die beiden den Boden 2 zusammen mit dem Bodenbereich 13 definierenden gegenüberliegenden Schenkel 11, 12 aufgenommen. Die beiden Schenkel 11, 12 werden durch einen verbindenden Bodenbereich 13 verbunden.

Der Abstand zwischen den beiden Schenkeln 11,12 entspricht im Wesentlichen der Ausdehnung C2 des Rohrs 6 beziehungsweise C1 des Deckels 3 in dieser Richtung.

Die Dicke der Wandstärke des Sammelrohrs 3 setzt sich dabei zusammen aus einer Dicke des Kernmaterials 8 und zuzüglich der Dicke B1 der Lotplattierung.

Die Gesamthöhe des Sammelrohrs 1 senkrecht zur Ebene der Schenkel 11, 12, in der Figur 1 als D bezeichnet, entspricht der Summe aus zweimal A1 plus C1 beziehungsweise plus C2.

Das Rohr 6 wird in die Öffnung 4 eingeschoben und wird dabei um einen Weg mit dem Betrag E in das Sammelrohr eingeschoben. Der Betrag E ist länger als die Wandstärke A1 des Sammelrohrs, so dass das Rohr 6 auch entlang der Innenwand der Schenkel 11, 12 eine Erstreckung aufweist, so dass das Rohr 6 auch in seinem Bereich 5 mit den Schenkeln 11, 12 verlötet ist.

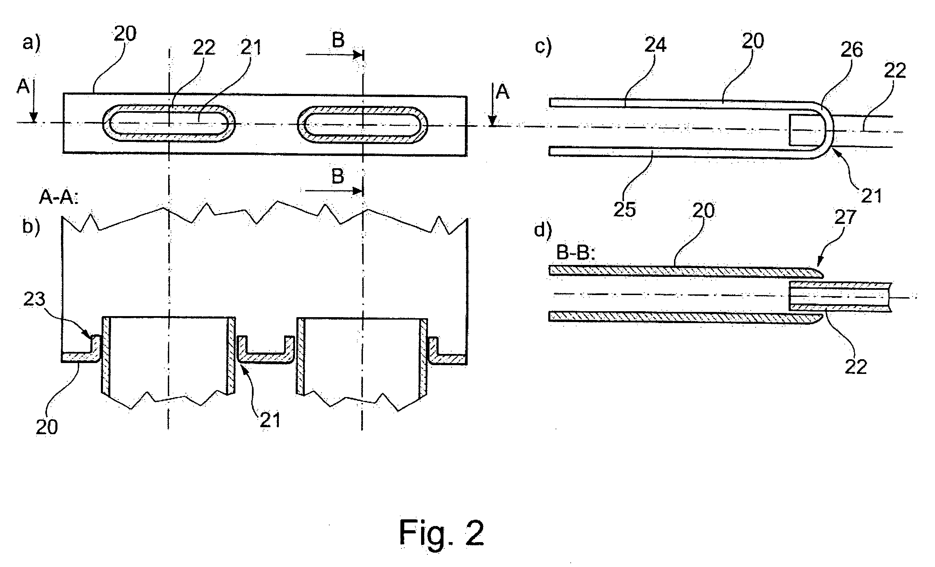

Die Figur 2a zeigt einen Ausschnitt aus einem Sammelrohr 20 mit Öffnungen 21 in die ein Rohr 22 eingeführt ist.

Die Figur 2b zeigt einen Schnitt des Sammelrohrs gemäß der Linie A-A der Figur 2a. Es ist zu erkennen, dass das Sammelrohr 20 am Rand der Öffnungen 21 Durchzüge 23 aufweist, die an den kurzen Flächen der Sammelrohre anliegen um eine bessere Verlötung zu erreichen.

Die Figur 2c zeigt das Sammelrohr der Figur 2a im Schnitt. Dabei ist zu erkennen, dass das Sammelrohr 20 im Wesentlichen aus zwei Schenkeln 24, 25 und einen verbindenden Bereich 26 gebildet wird, wobei die Öffnungen 21 im verbindenden Bereich 26 vorgesehen sind, durch welche das Rohr 22 in das Sammelrohr 20 eingeführt ist.

Die Figur 2d zeigt einen Schnitt durch das Sammelrohr 20 gemäß der Linie B-B der Figur 2a. Es ist zu erkennen, dass das Sammelrohr 20 an seinem vorderen Endbereich 27 nach außen verformte Durchzüge aufweist, die in seitlicher Anlage mit dem Endbereich des Rohrs 22 sind. Dadurch wird eine verbesserte Verlötung erzielt.

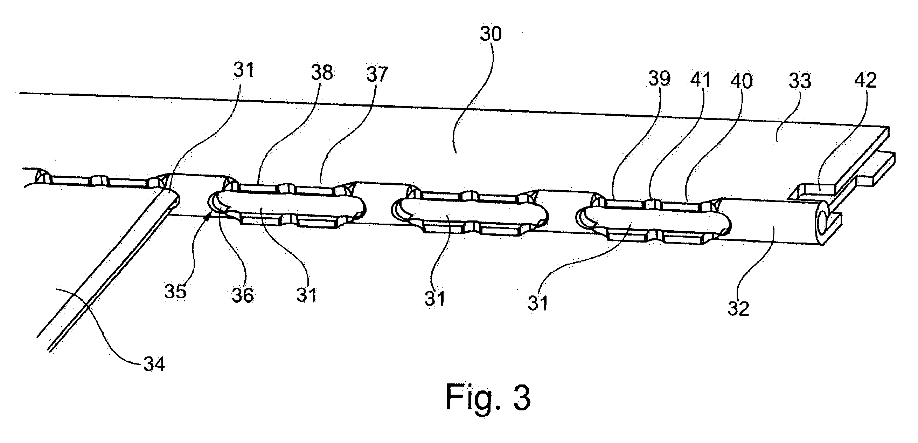

Die Figur 3 zeigt ein weiteres Ausführungsbeispiel eines Sammelrohres 30 in das Öffnungen 31 im Bodenbereich 32 des Rohrbodens 33 eingebracht sind. An der linken der Seite der Figur 3 ist zu erkennen, dass ein Flachrohr 34 in eine solche Öffnung 31 eingeführt ist. Weiterhin ist zu erkennen, dass an den Schmalseiten 35 der Öffnungen 31 nach innen gestellte Durchzüge 36 vorhanden sind, die im Wesentlichen im seitlichen Rundungsbereich an den Schmalseiten der Öffnungen 31 ausgebildet sind.

Entlang der Längsseiten 37 der Öffnungen 31 sind Durchzüge 38 vorgesehen, die nach außen gestellt sind, wobei diese Durchzüge 38 derart ausgebildet sind, dass sie zwei Teile aufweisen, einen ersten Teil 39 und einen zweiten Teil 40, wobei eine Einbuchtung 41 die beiden Teile des Durchzugs trennt. Die Einbuchtung dient der Aufnahme von Ausbuchtungen einer Deckplatte. Alternativ kann das Sammelrohr auch mit einer Ausbuchtung versehen sein, wobei dann die Deckplatte vorteilhaft Einbuchtungen aufweisen würde, um die Ausbuchtungen aufzunehmen.

Bevorzugt sind sowohl auf der oberen als auch auf der unteren Seite der Öffnungen 31 die nach außen gestellten Durchzüge 38 vorgesehen.

Darüber hinaus ist seitlich des Sammelrohrs 30 zu erkennen, dass eine Ausklinkung oder eine Aussparung 42 vorgesehen ist, zur formschlüssigen Verbindung des Deckels mit dem Boden oder eines seitlichen Abschlusses zum Abschließen des Sammelrohrs in lateraler Richtung.

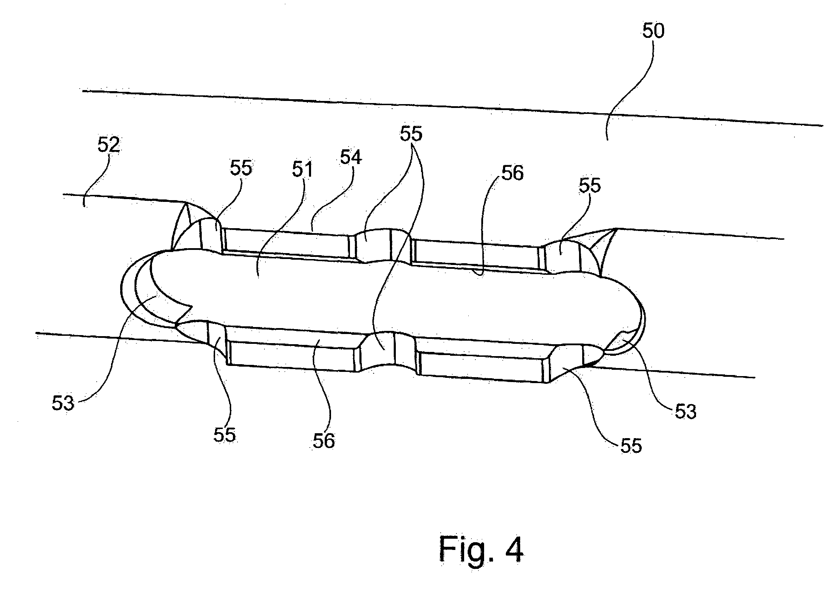

Die Figur 4 zeigt ein Ausschnitt eines Sammelrohrs 50 in vergrößerter Darstellung. Das Sammelrohr 50 weist eine Öffnung 51 im Bodenbereich 52 des Bodens auf, wobei die Öffnung seitliche abgerundete kurze Endbereiche 53 aufweist die als nach innen gerichtete Durchzüge ausgebildet sind. Seitlich bedeutet in diesem Zusammenhang als an der Schmalseite angeordnet. Darüber hinaus sind auf den langen Seiten der Öffnungen gegenüberliegend Durchzüge 54 ausgebildet, die nach außen gerichtet sind. Die Durchzüge 54 weisen Wiederum Einzüge bzw. Einbuchtungen 55 auf, die sowohl mittig als auch in den Endbereichen der Durchzüge 54 vorgesehen sind. Auch weisen die Durchzüge Abschrägungen 56 auf, die als Einführschrägen für die Einführung der Flachrohre in die Öffnung 51 dienen. Die Einführschrägen sind auf den sich gegenüber liegenden lnnenseiten der Durchzüge 54 angeordnet. Die Einzüge 55 dienen der Positionierung der Platte beziehungsweise Deckplatte, die auf die Flachrohre aufgelegt werden.

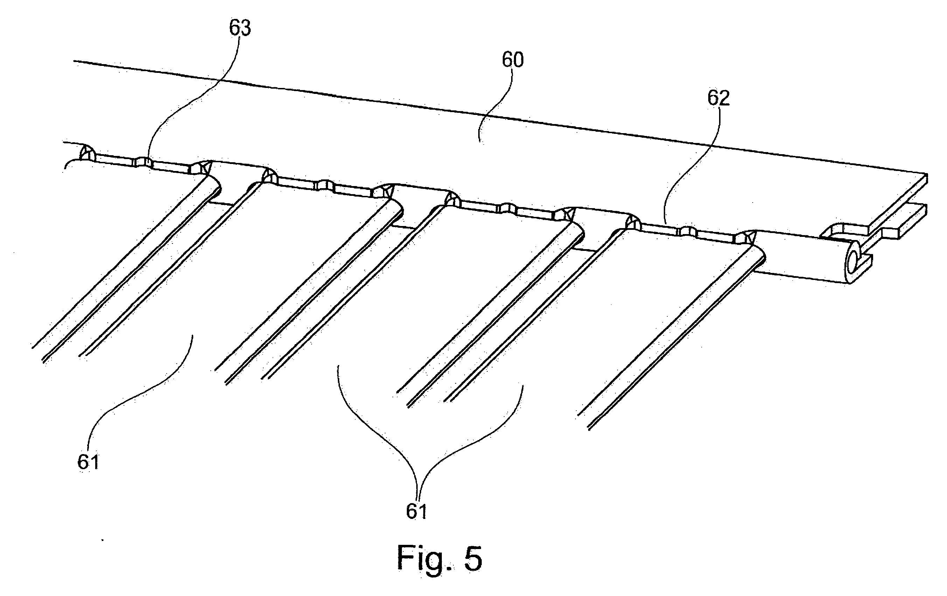

Die Figur 5 zeigt ein Sammelrohr 60 mit in Öffnungen eingeführte Flachrohre 61 die beabstandet zueinander angeordnet sind. Die Flachrohre kommen im Bereich der Öffnungen in Anlage mit dem nach innen gerichteten Durchzügen, siehe Bezugszeichen 53 der Figur 4 und mit den nach außen gerichteten Durchzügen 62. Weiterhin sind die Einschnürungen 63 der Durchzüge 62 zu erkennen.

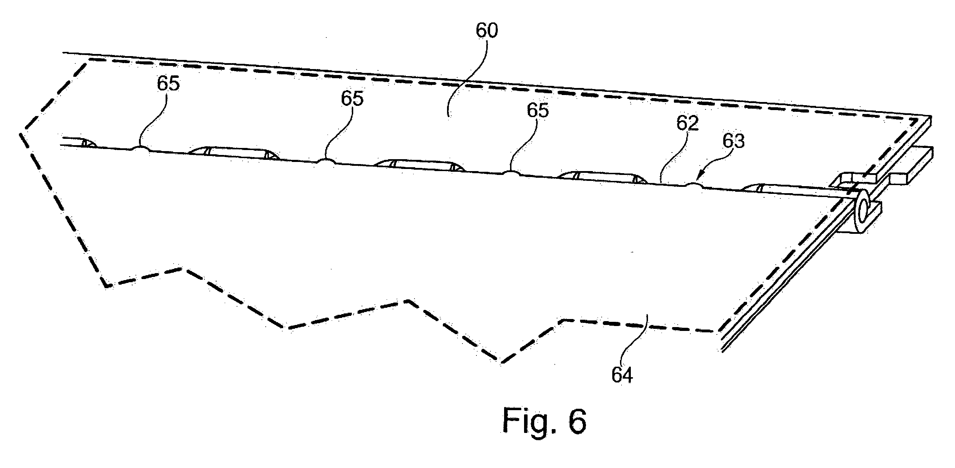

Die Figur 6 zeigt einen Ausschnitt eines Wärmeübertragers in der Anordnung der Figur 5 mit auf die Flachrohre 61 aufgelegter Deckplatte 64. Dabei weist die Deckplatte 64 an ihrer dem Sammelrohr 60 benachbarten Kante Vorsprünge 65 auf, die in die Einbuchtungen 63 des Sammelrohres eingreifen. Dadurch wird eine formschlüssige Verbindung mit dem Sammelrohr 60 erreicht, so dass eine exakte Positionierung zwischen dem Sammelrohr 60 und der Deckplatte 64 erreicht wird.

## Patentansprüche

1. Wärmeübertrager, insbesondere zur Temperierung für Batterien oder Elektronik, mit zumindest einem Sammelrohr (1) mit einem Boden (2) und einem Deckel (3), mit in dem Boden vorgesehenen Öffnungen (4) zur Aufnahme von Rohrenden (5) von Rohren (6), die in Fluidkommunikation mit den Sammelrohren stehen, wobei die Sammelrohre aus einem U-förmigen Element mit zwei parallelen Schenkeln (11, 12) und einem die Schenkel verbindenden Bodenbereich gebildet sind, wobei die Öffnungen (4) in dem Bodenbereich vorgesehen sind und **dadurch gekennzeichnet, daß** als Deckel (3) ein zwischen die Schenkel (11, 12) eingeführter Wandbereich vorgesehen ist.

2. Wärmeübertrager nach Anspruch 1, **dadurch gekennzeichnet, dass** die Höhe der Öffnungen (4) senkrecht zur Ebene der Schenkel im Wesentlichen dem Abstand der Schenkel auf ihrer Innenseite entspricht.

3. Wärmeübertrager nach einem der vorhergehenden Ansprüche, **dadurch gekennzeichnet, dass** die Schenkel (11, 12) eine Lotplattierung aufweisen, die auf der Oberfläche der Innenseite der Schenkel aufgebracht ist.

4. Wärmeübertrager nach einem der vorhergehenden Ansprüche, **dadurch gekennzeichnet, dass** das Rohrende (5) zumindest eines Rohrs mit den beiden sich gegenüberliegenden Schenkeln (11, 12) des Bodens verlötet ist.

5. Wärmeübertrager nach einem der vorhergehenden Ansprüche, **dadurch gekennzeichnet, dass** der Deckel (3) durch ein im Schnitt vorzugsweise rechteckiges oder rundes, massives Metallteil gebildet ist.

6. Wärmeübertrager nach einem der vorhergehenden Ansprüche, **dadurch gekennzeichnet, dass** die Rohre (6) als Flachrohre mit Flachseiten gebildet sind, wobei die Ausdehnung der Rohre in einer Ebene parallel zu der Ebene der Schenkel des Bodens größer ist als in einer dazu senkrechten Ebene, insbesondere um das 3- bis 12-fache größer ist.

7. Wärmeübertrager nach einem der vorhergehenden Ansprüche, **dadurch gekennzeichnet, dass** eine Mehrzahl von Flachrohren nebeneinander angeordnet sind und auf die Flachseiten der Flachrohre eine Platte (64) aufgelegt und mit den Flachrohren verbunden ist.

8. Wärmeübertrager nach Anspruch 7, **dadurch gekennzeichnet, dass** die Ausdehnung der Platte (64) in einer Richtung senkrecht zur Ebene der Schenkel im Wesentlichen der Ausdehnung der Schenkel in dieser Richtung entspricht.

9. Wärmeübertrager nach einem der vorhergehenden Ansprüche, **dadurch gekennzeichnet, dass** der Boden auf seiner Außenseite im Bodenbereich Durchzüge (54) aufweist.

10. Wärmeübertrager nach Anspruch 9, **dadurch gekennzeichnet, dass** die Durchzüge (54) die Flachseiten der Flachrohre übergreifen.

## Claims

1. Heat exchanger, in particular for controlling the temperature of batteries or electronics, having at least one header (1) with a bottom (2) and a top (3), with openings (4) which are provided in the bottom for receiving tube ends (5) of tubes (6) which are in fluidic communication with the headers, wherein the headers being formed from a U-shaped element with two parallel limbs (11, 12) and a bottom region which connects the limbs, wherein the openings (4) being provided in the bottom region and **characterised in that** a wall region which is introduced between the limbs (11, 12) is provided as top (3).

2. Heat exchanger according to claim 1, **characterised in that** the height of the openings (4) perpendicularly with respect to the plane of the limbs corresponds substantially to the spacing of the limbs on their inner side.

3. Heat exchanger according to one of the preceding claims, **characterised in that** the limbs (11, 12) have a solder plating which is applied on the surface of the inner side of the limbs.

4. Heat exchanger according to one of the preceding claims, **characterised in that** the tube end (5) of at least one tube is soldered to the two limbs (11, 12) of the bottom which lie opposite one another.

5. Heat exchanger according to one of the preceding claims, **characterised in that** the top (3) is formed by a solid metal part which is preferably rectangular or round in cross section.

6. Heat exchanger according to one of the preceding claims, **characterised in that** the tubes (6) are formed as flat tubes with flat sides, wherein the extent of the tubes in a plane parallel to the plane of the limbs of the bottom being greater than in the plane which is perpendicular with respect thereto, in particular being from 3 times to 12 times greater.

7. Heat exchanger according to one of the preceding claims, **characterised in that** a plurality of flat tubes are arranged next to one another, and a plate (64) is placed onto the flat sides of the flat tubes and is connected to the flat tubes.

8. Heat exchanger according to claim 7, **characterised in that** the extent of the plate (64) in a direction perpendicular with respect to the plane of the limbs corresponds substantially to the extent of the limbs in said direction.

9. Heat exchanger according to one of the preceding claims, **characterised in that**, on its outer side, the bottom has rim holes (54) in the bottom region.

10. Heat exchanger according to claim 9, **characterised in that** the rim holes (54) reach beyond the flat sides of the flat tubes.

## Revendications

1. Echangeur de chaleur, en particulier servant à l'équilibrage de température pour des batteries ou pour l'électronique, comprenant au moins un tube collecteur (1) comportant un fond (2) et un couvercle (3), avec des ouvertures (4) prévues dans le fond et servant au logement d'extrémités tubulaires (5) de tubes (6) qui sont en communication fluidique avec les tubes collecteurs, où les tubes collecteurs sont formés par un élément en forme de U comprenant deux branches parallèles (11, 12), et par une zone de fond reliant les branches, où les ouvertures (4) sont prévues dans la zone de fond, et **caractérisé en ce qu'**il est prévu une zone de paroi introduite entre les branches (11, 12), ladite zone servant de couvercle (3).

2. Echangeur de chaleur selon la revendication 1, **caractérisé en ce que** la hauteur des ouvertures (4), perpendiculairement au plan des branches, correspond pratiquement à l'écartement des branches sur leur côté intérieur.

3. Echangeur de chaleur selon l'une ou l'autre des revendications précédentes, **caractérisé en ce que** les branches (11, 12) présentent un placage de brasure qui est appliqué sur la surface du côté intérieur des branches.

4. Echangeur de chaleur selon l'une quelconque des revendications précédentes, **caractérisé en ce que** l'extrémité tubulaire (5) d'au moins un tube est brasée avec les deux branches (11, 12) du fond, qui se font face.

5. Echangeur de chaleur selon l'une quelconque des revendications précédentes, **caractérisé en ce que** le couvercle (3) est formé par une pièce métallique massive qui, en coupe, est de préférence rectangulaire ou ronde.

6. Echangeur de chaleur selon l'une quelconque des revendications précédentes, **caractérisé en ce que** les tubes (6) sont formés comme des tubes plats ayant des côtés plats, où l'étendue des tubes, dans un plan parallèle au plan des branches du fond, est plus grande, en particulier est de 3 fois à 12 fois plus grande que dans un plan perpendiculaire audit plan des branches.

7. Echangeur de chaleur selon l'une quelconque des revendications précédentes, **caractérisé en ce qu'**il y a une pluralité de tubes plats disposés les uns à côté des autres, et une plaque (64) est appliquée sur les côtés plats des tubes plats et assemblée avec les tubes plats.

8. Echangeur de chaleur selon la revendication 7, **caractérisé en ce que** l'étendue de la plaque (64), dans une direction perpendiculaire au plan des branches, correspond pratiquement à l'étendue des branches dans cette direction.

9. Echangeur de chaleur selon l'une quelconque des revendications précédentes, **caractérisé en ce que** le fond présente, sur son côté extérieur, des passages (54) placés dans la zone du fond.

10. Echangeur de chaleur selon la revendication 9, **caractérisé en ce que** les passages (54) chevauchent les côtés plats des tubes plats.
